(19) Europäisches Patentamt
European Patent Office
Office européen des brevets

(11) **EP 2 879 284 A2**

(12) **EUROPEAN PATENT APPLICATION**

(43) Date of publication:
03.06.2015 Bulletin 2015/23

(51) Int Cl.:
**H02M 1/14** *(2006.01)* **H02M 7/5387** *(2007.01)*
**H02M 7/5395** *(2006.01)* H02M 1/00 *(2007.01)*
H02M 1/12 *(2006.01)*

(21) Application number: 14192813.5

(22) Date of filing: 12.11.2014

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 28.11.2013 JP 2013246615

(71) Applicant: Kabushiki Kaisha Yaskawa Denki
Kitakyushu-shi, Fukuoka 806-0004 (JP)

(72) Inventor: Yamanaka, Katsutoshi
Kitakyushu-shi, Fukuoka 806-0004 (JP)

(74) Representative: Viering, Jentschura & Partner
Patent- und Rechtsanwälte
Grillparzerstrasse 14
81675 München (DE)

(54) **Current source power conversion apparatus and current source power conversion method**

(57) When first drive signals (Sup*, Sun*, Svp*, Svn*, Swp*, Swn*) are driving signals for applying a short-circuit mode for turning on a plurality of switching elements of the same output phase, the current source power conversion apparatus (1) according to one embodiment generates second drive signals (Sup**, Sun**, Svp**, Svn**, Swp**, Swn**) for applying the short-circuit mode to an output phase having the smallest absolute value of a phase voltage, and switches the first drive signals to the second drive signals. This allows for providing the current source power conversion apparatus that is able to suppress the frequency change of the current ripple while reducing the amplitude of the common mode voltage.

*FIG. 1*

EP 2 879 284 A2

**Description**

BACKGROUND

1. Technical Field

The embodiments of the present disclosure relate to a current source power conversion apparatus and a current source power conversion method.

2. Related Art

Conventionally, there have been known current source power conversion apparatus that drive the switching elements based on the current commands. In such the conventional current source power conversion apparatus, since the amplitude of the common mode voltage is large, the electromagnetic interference wave affecting equipment receiving a radio wave is likely to be generated. Therefore, the present applicant has proposed the following technique (see JP-A-2013-183565). In this technique, a plurality of line-to-line current commands is increased or decreased to the bottom value or greater and/or the peak value or less of the carrier signal, so that the amplitude of the common mode voltage is reduced.

In the current source power conversion apparatus disclosed in JP-A-2013-183565, however, the output period of the zero vector is switched due to the switching of the increasing and decreasing process of the line-to-line current commands. Therefore, the frequency component in the current ripple is likely to change to a large extent. For example, in response that, the state illustrated in FIG. 28 in JP-A-2013-183565 is switched to the state illustrated in FIG. 30, the output period of the zero vector becomes twofold and thus the frequency component in the current ripple changes to a large extent.

One form of the embodiments has been made in view of the above. One of the purposes in one form of the embodiments is to provide a current source power conversion apparatus and a current source power conversion method that are able to suppress the frequency change of the current ripple while reducing the amplitude of the common mode voltage.

SUMMARY

The current source power conversion apparatus according to one form of the embodiments has an inverter unit and a drive control unit. The inverter unit has a plurality of switching elements connected in series between the positive terminal and the negative terminal of the direct current source for each output phase. The drive control unit controls the inverter unit according to the line-to-line current commands by an output mode for turning on the switching elements of the different output phases to supply current between the output inter-phases and by a short-circuit mode for turning on the plurality of switching elements of the same output phase. The drive control unit has a current command correction unit, a signal generation unit, and a selector unit. The current command correction unit increases or decreases the plurality of line-to-line current commands with respect to the carrier signal so that all of the plurality of line-to-line current commands to the different output inter-phases are greater than or equal to a bottom value or less than or equal to a peak value of the carrier signal. The signal generation unit generates the first drive signals for respectively driving a plurality of switching elements so that the target output phase of the short-circuit mode differs between the case where all of the plurality of line-to-line current commands are smaller than the carrier signal and the case where all of the plurality of line-to-line current commands are greater than the carrier signal. The selector unit generates second drive signals for applying the short-circuit mode to the output phase having the smallest absolute value of the phase voltage when the first drive signals are the drive signals for applying the short-circuit mode, and switches the first drive signals to the second drive signals.

Further, the current source power conversion method according to one form of the embodiments includes increasing or decreasing a plurality of line-to-line current commands with respect to the carrier signal so that all of the plurality of line-to-line current commands outputted to an inverter having a plurality of switching elements connected in series provided for each output phase between a positive terminal and a negative terminal of the direct current source are greater than or equal to the bottom value or less than or equal to the peak value of the carrier signal, generating the first drive signals for respectively driving a plurality of switching elements so that the target output phase of the short-circuit mode for turning on a plurality of switching elements of the same output phase differs between the case where all of the plurality of line-to-line current commands are smaller than the carrier signal and the case where all of the plurality of line-to-line current commands are greater than the carrier signal, and generating second drive signals for applying the short-circuit mode to the output phase having the smallest absolute value of the phase voltage when the first drive signals are the drive signals for applying the short-circuit mode and switching the first drive signals to the second drive signals.

The above forms allow for providing the current source power conversion apparatus and the current source power conversion method that are able to suppress the frequency change of the current ripple while reducing the amplitude of the common mode voltage.

BRIEF DESCRIPTION OF DRAWINGS

FIG. 1 is a diagram illustrating a configuration of a current source power conversion apparatus according to an embodiment;

FIG. 2 is a diagram illustrating a relationship between phase current commands and line-to-line current commands;

FIG. 3 is a diagram for illustrating a spatial vector modulation method;

FIG. 4 is a diagram for illustrating a configuration example of a drive signal generator;

FIG. 5 is a flowchart illustrating a flow for generating switch drive signals by the drive signal generator;

FIG. 6 is a diagram illustrating a configuration example of a current command corrector;

FIG. 7 is a diagram illustrating one example of a determination table;

FIG. 8 is a diagram for illustrating a relationship among the line-to-line current commands, a first offset, and a second offset;

FIG. 9A is a diagram for illustrating a relationship between the line-to-line current commands and corrected line-to-line current commands;

FIG. 9B is a diagram for illustrating a relationship between the line-to-line current commands and the corrected line-to-line current commands;

FIG. 10 is a diagram illustrating a configuration example of a comparator;

FIG. 11 is a diagram illustrating a configuration example of a polarity determiner;

FIG. 12 is a diagram illustrating a configuration example of a signal generator;

FIG. 13 is a diagram illustrating a configuration example of a logic circuit;

FIG. 14 is a diagram illustrating a configuration example of the logic circuit;

FIG. 15 is a diagram illustrating a configuration example of a zero vector selector;

FIG. 16 is a diagram illustrating a relationship among the line-to-line current commands, a carrier signal, and first switch drive signals;

FIG. 17 is a diagram illustrating a relationship among the line-to-line current commands, the carrier signal, and the first switch drive signals; and

FIG. 18 is a diagram illustrating a relationship among the line-to-line current commands, the carrier signal, and the first switch drive signals.

DETAILED DESCRIPTION

In the following detailed description, for purpose of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

The embodiments of the current source power conversion apparatus disclosed by the present application will be described below in detail by referring to the drawings.

[1. Current source power conversion apparatus]

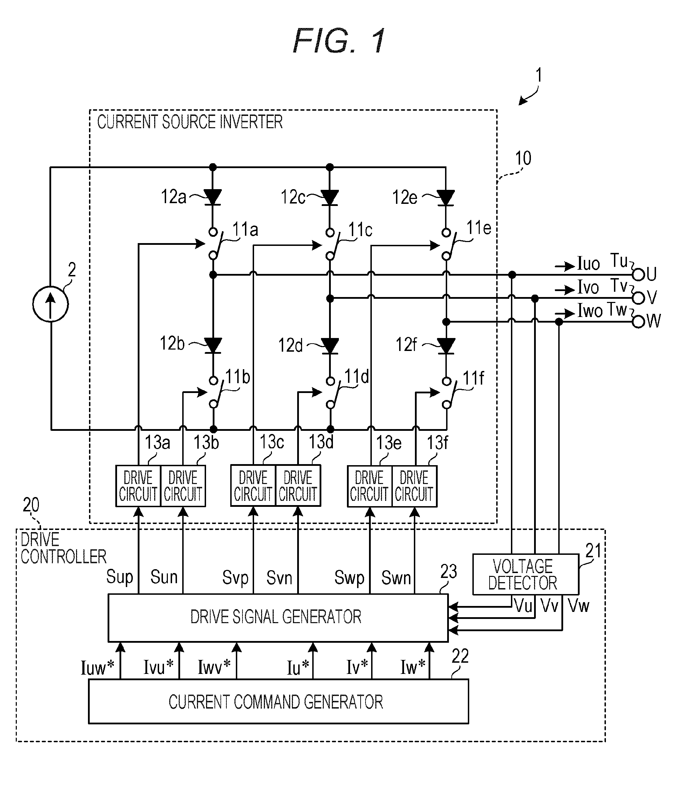

FIG. 1 is a diagram illustrating a configuration of a current source power conversion apparatus according to an embodiment. As illustrated in FIG. 1, a current source power conversion apparatus 1 according to the embodiment has a current source inverter 10 and a drive controller 20 configured to control the current source inverter 10.

[1.1. Current source inverter 10]

The current source inverter 10 converts the direct current power supplied from a direct current source 2 and outputs the alternating current power to a U phase, a V phase, and a W phase of the load. The load may be an electric motor, for example. It is noted that, in the example illustrated in FIG. 1, the direct current source 2 is provided outside the current source inverter 10. Instead, the direct current source 2 may be provided inside the current source inverter 10.

The current source inverter 10 has six switching elements 11a to 11f, six rectifying elements 12a to 12f, and six drive circuits 13a to 13f configured to drive the switching elements 11a to 11f. It is noted that, in the followings, the switching elements 11a to 11f may be collectively referred to as switching element(s) 11. Further, the rectifying elements 12a to 12f may be collectively referred to as rectifying element(s) 12.

In the current source inverter 10, three bridge circuits are connected in parallel between the positive terminal and the negative terminal of the direct current source 2. The bridge circuit has two switching elements 11 connected in series. The rectifying element 12 for preventing the reverse flow is connected in series to each switching element 11. A U phase terminal Tu is connected between the switching elements 11a and 11b connected in series. A V phase terminal Tv is connected between the switching elements 11c and 11d connected in series. A W phase terminal Tw is connected between the switching elements 11e and 11f connected in series.

The switching element 11 is a switching element such as an IGBT (Insulated Gate Bipolar Transistor), a MOSFET (Metal-Oxide-Semiconductor Field-Effect Transistor), or the like that is turned on and off by a switch drive signal. It is noted that a reverse block IGBT can be used in place of the rectifying element 12 and the switching element 11.

The drive circuits 13a to 13f generate switch drive signals according to switch drive signals Sup, Sun, Svp, Svn, Swp, and Swn outputted from the drive controller 20. The drive circuits 13a to 13f turn on and off the switching elements 11a to 11f by these switch drive signals.

[1.2. Drive controller 20]

The drive controller 20 generates the switch drive signals Sup, Sun, Svp, Svn, Swp, and Swn that are inputted to the drive circuits 13a to 13f, respectively. The drive controller 20 has a voltage detector 21, a current command generator 22, and a drive signal generator 23.

The voltage detector 21 detects an instantaneous voltage values Vu, Vv, and Vw (hereafter, referred to as phase voltage detection values Vu, Vv, and Vw) of the U phase, the V phase, and the W phase of the output phases, and outputs them to the signal generator 23.

The current command generator 22 outputs, in parallel, phase current commands Iu*, Iv*, and Iw* corresponding to respective output phases of the U phase, the V phase, and the W phase and line-to-line current commands Iuw*, Ivu*, and Iwv* corresponding to three different output inter-phases (U-W phase, V-U phase, and W-V phase). The relationship between the phase current commands Iu*, Iv*, and Iw* and the line-to-line current commands Iuw*, Ivu*, and Iwv* is represented by the following equations (1) to (3), for example.

$$Iuw* = \frac{1}{3}\left(Iu* - Iw*\right) \qquad \cdots \quad (1$$

$$Ivu* = \frac{1}{3}\left(Iv* - Iu*\right) \qquad \cdots \quad (2$$

$$Iwv* = \frac{1}{3}\left(Iw* - Iv*\right) \qquad \cdots \quad (3$$

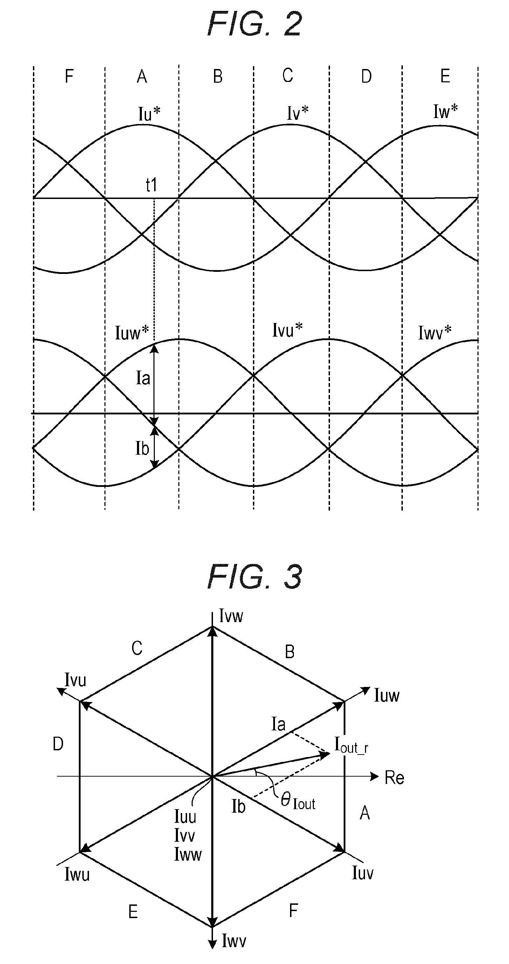

FIG. 2 is a diagram illustrating the relationship between the phase current commands Iu*, Iv*, and Iw* and the line-to-line current commands Iuw*, Ivu*, and Iwv*. FIG. 2 illustrates one period of respective current commands that is divided into six areas A to F each of which has an electric angle of 60 degrees. The area A is an area including the positive peak value of the phase current command Iu*. The area B is an area including the negative peak value of the phase current command Iw*. The area C is an area including the positive peak value of the phase current command Iv*. The area D is an area including the negative peak value of the phase current command Iu*. The area E is an area including the positive peak value of the phase current command Iw*. The area F is an area including the negative peak value of the phase current command Iv*.

As illustrated in FIG. 1, the drive signal generator 23 obtains the line-to-line current commands Iuw*, Ivu*, and Iwv* and the phase current commands Iu*, Iv*, and Iw* from the current command generator 22, and further obtains the phase voltage detection values Vu, Vv, and Vw from the voltage detector 21. Based on the obtained information, the drive signal generator 23 uses the spatial vector modulation method to generate the switch drive signals Sup, Sun, Svp, Svn, Swp, and Swn.

FIG. 3 is a diagram for illustrating the spatial vector modulation method. FIG. 3 illustrates nine current vectors Iuv, Iuw, Ivw, Ivu, Iwu, Iwv, Iuu, Ivv, and Iww in the spatial vector modulation. The drive signal generator 23 outputs the switch drive signals Sup, Sun, Svp, Svn, Swp, and Swn corresponding to these current vectors. In the followings, for the purpose of illustration, to output the switch drive signal corresponding to the current vector may also be referred to as to output the current vector.

The current vectors Iuv, Iuw, Ivw, Ivu, Iwu, and Iwv of the nine current vectors are the current vectors corresponding to the currents flowing between the different output inter-phases. Further, the current vectors Iuu, Ivv, and Iww are the current vectors corresponding to the output phases, respectively, and whose magnitudes are zero. In the followings, the current vector which corresponds to the current flowing between the difference phases is also referred to as "effective vector". Furthermore, the current vector which corresponds to one output phase and has the magnitude of zero is also referred to as "zero vector".

The drive signal generator 23 determines which of the areas A to F (see FIG 2) the area corresponding to the phase state of the phase current commands Iu*, Iv*, and Iw* is. The drive signal generator 23 then outputs two effective vectors neighboring the determined area and a zero vector neighboring these effective vectors. This output state is expressed by a current command vector $I_{out-r}$ in FIG. 3. The drive signal generator 23 adjusts the time for outputting the zero vector and two effective vectors in order to output the current expressed by the current command vector $I_{out\_r}$.

The vector Ia indicated in FIG. 3 represents an Iuw vector direction component of the current command vector $I_{out\_r}$. The vector Ib represents an Iuv vector direction component of the current command vector $I_{out\_r}$. The current command vector $I_{out\_r}$ indicated in FIG. 3 is a current command vector $I_{out\_r}$ at time t1 indicated in FIG. 2. Assuming that the magnitudes of the current vectors Iuw, Ivw, Ivu, Iwu, Iwv, and Iuv are equal to the current value of the direct current source 2, the magnitudes of the vectors Ia and Ib indicated in FIG. 3 match the scalars Ia and Ib indicated in FIG. 2.

In the drive signal generator 23, the PWM (Pulse Width Modulation) scheme is employed for generating the current command vector $I_{out\_r}$. For example, when the control period of the PWM is denoted as T, the current value of the direct current source 2 is denoted as IL, the time for outputting one of the two effective vectors is denoted as Ta, and the time for outputting the other is denoted as Tb, the Ta and Tb are determined by the following equations (4) and (5), for example.

$$\mathrm{Ta} = \mathrm{T} \times \frac{\mathrm{Ia}}{\mathrm{IL}} \quad \cdot \cdot \cdot \quad (4)$$

$$\mathrm{Tb} = \mathrm{T} \times \frac{\mathrm{Ib}}{\mathrm{IL}} \quad \cdot \cdot \cdot \quad (5)$$

In the control period T, the drive signal generator 23 outputs one of the effective vectors for the time Ta and outputs the other effective vector for the time Tb. Furthermore, the drive signal generator 23 outputs the zero vector in the remaining time Tc (= T - Ta - Tb) of the control period T.

For example, in the case of the current command vector $I_{out\_r}$ at the time t1 indicated in FIG. 2, the drive signal generator 23 outputs the current vector Iuw for the time Ta and outputs the current vector Iuv for the time Tb. Furthermore, the drive signal generator 23 outputs the zero vector in the control remaining time Tc.

The drive signal generator 23 is configured to select, as the zero vector forming the current command vector $I_{out\_r}$, a zero vector by which the amplitude of the common mode voltage is the lowest. This allows for the reduction in the amplitude of the common mode voltage generated by the current source power conversion apparatus 1. In the followings, specific description will be provided regarding the reduction in the amplitude of the common mode voltage.

In the current source inverter 10, in response that all of the switching elements 11a to 11f are turned off, the current from the direct current source 2 to the load is shut off. Since the direct current source 2 has a large inductance, the shutting off of the current of the direct current source 2 causes an overvoltage.

Therefore, in addition to an output mode for outputting the effective vectors, the drive signal generator 23 has a short-circuit mode for outputting the zero vectors to secure the current path from the direct current source 2 and thereby suppress the occurrence of the overvoltage.

The short-circuit mode generates the common mode voltage having a large absolute value compared to the output mode. Therefore, in order to reduce the common mode voltage, it is effective to reduce the common mode voltage in the short-circuit mode in the current source power conversion apparatus. In the short-circuit mode, the phase in which the zero vector is outputted does not affect the output current of the current source inverter 10 regardless of whether it is the U phase, the V phase, or the W phase. Thus, out of the U phase, the V phase, and the W phase, the phase having the smallest absolute value of the phase voltage is selected as the phase in which the zero vector is outputted in the current source power conversion apparatus 1.

Specifically, the drive signal generator 23 determines the phase having the smallest absolute value of the phase voltage based on the phase voltage detection values Vu, Vv, and Vw inputted from the voltage detector 21 and selects the zero vector corresponding to the phase having the smallest absolute value of the phase voltage. Thereby, the common mode voltage in the short-circuit mode can be reduced, which allows for the suppression of the change in the common mode voltage at the transition from the short-circuit mode to the output mode.

Further, the drive signal generator 23 generates the switch drive signals Sup, Sun, Svp, Svn, Swp, and Swn so as to avoid the significant change of the output period of the zero vector. This allows for the suppression of the frequency change of the current ripple.

Further, the drive signal generator 23 is able to change the selection process of the zero vector depending on the voltage outputted from the current source inverter 10 (hereafter, also referred to as output voltage). For example, if the amplitude of the output voltage is relatively large, the drive signal generator 23 selects the zero vector corresponding to the phase having the smallest absolute value of the phase voltage and, otherwise, selects the zero vector predetermined by the spatial vector method.

In the following description, it is assumed that the drive signal generator 23 changes the selection process of the zero vector depending on the amplitude of the output voltage. However, the drive signal generator 23 is also able to select the zero vector corresponding to the phase having the smallest absolute valued of the phase voltage regardless of the amplitude of the output voltage.

[2. Drive signal generator 23]

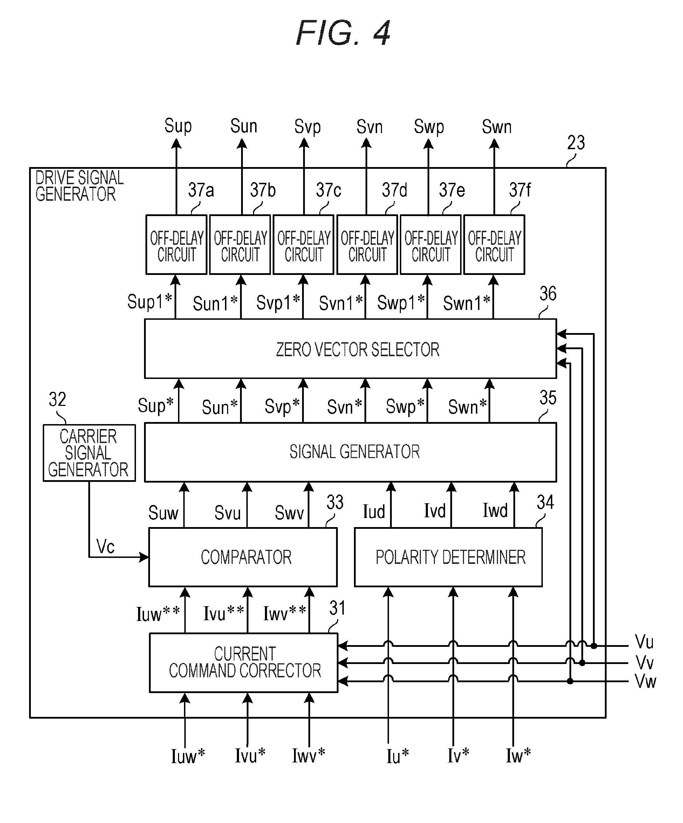

The drive signal generator 23 will be more specifically described below. FIG. 4 is a diagram for illustrating a configuration example of the drive signal generator 23.

As illustrated in FIG. 4, the drive signal generator 23 has a current command corrector 31, a carrier signal generator 32, a comparator 33, a polarity determiner 34, a signal generator 35, a zero vector selector 36, and six off-delay circuits 37a to 37f. In the followings, the off-delay circuits 37a to 37f may be collectively referred to as off-delay circuits 37. It is noted that the current command corrector 31 corresponds to an example of the current command corrector, the signal generator 35 corresponds to an example of the signal generator, and the zero vector selector 36 corresponds to an example of the selector.

[2. 1. Process by the drive signal generator 23]

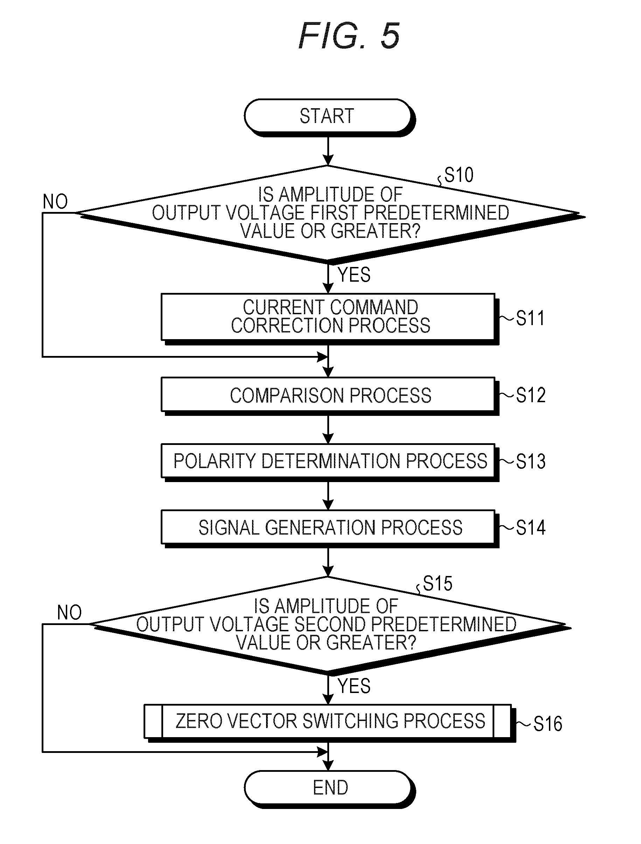

FIG. 5 is a flowchart illustrating a flow of generating the switch drive signals Sup, Sun, Svp, Svn, Swp, and Swn by the drive signal generator 23. The current command corrector 31 of the drive signal generator 23 determines whether or not the amplitude of the output voltage is greater than or equal to a first predetermined value based on the phase voltage detection values Vu, Vv, and Vw (step S10), as illustrated in FIG. 5.

Upon determining that the amplitude of the output voltage is greater than or equal to the first predetermined value (step S10; Yes), the current command corrector 31 performs the current command correction process for increasing or decreasing the line-to-line current commands Iuw*, Ivu*, and Iwv* (step S11).

By the above current command correction process, the line-to-line current commands Iuw*, Ivu*, and Iwv* which are greater than or equal to the bottom value or less than or equal to the peak value of the carrier signal Vc are outputted from the current command corrector 31 to the comparator 33. This allows the output period of the zero vector to be the same period as the period of the carrier signal Vc, so that the frequency change in the current ripple can be suppressed.

It is noted that, if the amplitude of the output voltage is not greater than nor equal to the first predetermined value (if it is less than the first predetermined value), the current command corrector 31 stops the current command correction process and outputs the line-to-line current commands Iuw*, Ivu*, and Iwv* as they stand. It is noted that, for the purpose of illustration, the line-to-line current commands Iuw*, Ivu*, and Iwv* outputted from the current command corrector 31 are referred to as corrected line-to-line current commands Iuw**, Ivu**, and Iwv**.

If it is not determined that the amplitude of the output voltage is greater than or equal to the first predetermined value at step S10 (step S10; No) or when the process of step S11 ends, the comparator 33 performs a comparison process (step S12). In the comparison process, the comparator 33 compares the corrected line-to-line current commands Iuw**, Ivu**, and Iwv** to the carrier signal Vc and generates the PWM pulse signals Suw, Svu, and Swv.

Further, the polarity determiner 34 performs a polarity determination process (step S13). In the polarity determination process, the polarity determiner 34 determines the polarities of the phase current commands Iu*, Iv*, and Iw* and generates phase current polarity signals Iud, Ivd, and Iwd corresponding to the polarities of the phase current commands Iu*, Iv*, and Iw*, respectively.

Upon the completion of the process of steps S12 and S13, the signal generator 35 performs a signal generation process for generating the first switch drive signals Sup*, Sun*, Svp*, Svn*, Swp*, and Swn* (step S14). It is noted that, in the followings, the first switch drive signals Sup*, Sun*, Svp*, Svn*, Swp*, and Swn* may be collectively referred to as first switch drive signals S*.

In the signal generation process, the signal generator 35 generates the first switch drive signals S* based on the PWM pulse signals Suw, Svu, and Swv and the phase current polarity signals Iud, Ivd, and Iwd. The signal generator 35 generates the first switch drive signals S* so that the target output phase of the short-circuit mode differs between the case of the state where all of the corrected line-to-line current commands Iuw**, Ivu**, and Iwv** are smaller than the carrier signal Vc and the case of the state where all of the corrected line-to-line current commands Iuw**, Ivu**, and Iwv** are greater than the carrier signal Vc.

Further, the zero vector selector 36 determines whether or not the amplitude of the output voltage is greater than or equal to a second predetermined value based on the phase voltage detection values Vu, Vv, and Vw (step S15). When determining that the amplitude of the output voltage is greater than or equal to the second predetermined value (step S15; Yes), the zero vector selector 36 performs a zero vector switching process (step S16).

In the zero vector switching process, when the first switch drive signals S* are the drive signals for applying the short-circuit mode, the zero vector selector 36 generates the second switch drive signals Sup**, Sun**, Svp**, Svn**, Swp**, and Swn**. It is noted that, in the followings, the second switch drive signals Sup**, Sun**, Svp**, Svn**, Swp**, and Swn** may be collectively referred to as second switch drive signals S**.

The second switch drive signals S** are signals for applying the short-circuit mode to the output phase having the smallest absolute value of the phase voltage. In this case, the zero vector selector 36 switches the first switch drive signals S* outputted from the signal generator 35 to the second switch drive signals S**. The zero vector selector 36 outputs the second switch drive signals S** to the current source inverter 10 via the off-delay circuits 37.

On the other hand, when the first switch drive signals S* are not the drive signals for applying the short-circuit mode, the zero vector selector 36 outputs the first switch drive signals S* outputted from the signal generator 35 to the current source inverter 10 via the off-delay circuits 37. Also, if it is not determined that the amplitude of the output voltage is greater than or equal to the second predetermined value at step S15 (step S15; No), the zero vector selector 36 outputs the first switch drive signals S* to the current source inverter 10 via the off-delay circuits 37.

As described above, when the first switch drive signals S* are the drive signals for applying the short-circuit mode, the drive signal generator 23 outputs, to the current source inverter 10, the second switch drive signals S** for applying the short-circuit mode to the output phase having the smallest absolute value of the phase voltage. Thereby, the short-circuit mode is applied to the output phase having the smallest absolute value of the phase voltage. Therefore, the amplitude of the common mode voltage can be reduced.

In the followings, specific description will be provided regarding the current command corrector 31, the carrier signal generator 32, the comparator 33, the polarity determiner 34, the signal generator 35, the zero vector selector 36, and the off-delay circuits 37. It is noted that each part of the drive signal generator 23 is implemented by, for example, an integrated circuit such as ASIC (Application Specific Integrated Circuit), FPGA (Field Programmable Gate Array), or the like.

Further, the drive signal generator 23 may include a microcomputer having a CPU (Central Processing Unit), a ROM (Read Only Memory), a RAM (Random Access Memory), an input / output ports, and so on and various circuits. In this case, the CPU reads out and executes the program stored in the ROM to function as the current command corrector 31, the carrier signal generator 32, the comparator 33, the polarity determiner 34, the signal generator 35, the zero vector selector 36, and the off-delay circuits 37.


[2. 2. Current command corrector 31]


The current command corrector 31 increases or decreases the line-to-line current commands Iuw*, Ivu*, and Iwv* based on the phase voltage detection values Vu, Vv, and Vw to generate the corrected line-to-line current commands Iuw**, Ivu**, and Iwv**. The current command corrector 31 obtains the line-to-line current commands Iuw*, Ivu*, and Iwv* from the current command generator 22 and obtains the phase voltage detection values Vu, Vv, and Vw from the voltage detector 21. Further, when determining that the amplitude is lower than the first predetermined value based on the phase voltage detection values Vu, Vv, and Vw, the current command corrector 31 outputs the line-to-line current commands Iuw*, Ivu*, and Iwv* to the comparator 33 as the corrected line-to-line current commands Iuw**, Ivu**, and Iwv**

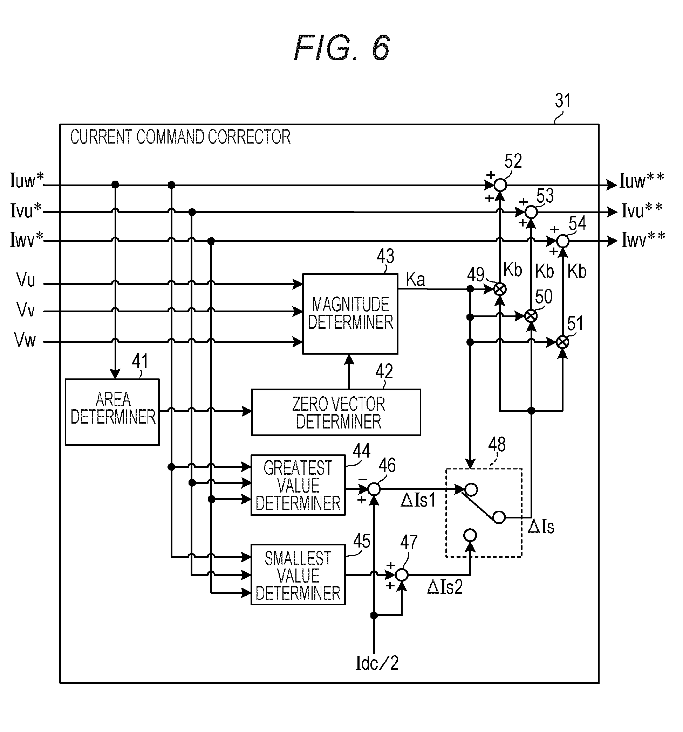

FIG. 6 is a diagram illustrating a configuration example of the current command corrector 31. The current command corrector 31 illustrated in FIG. 6 has an area determiner 41, a zero vector determiner 42, a magnitude determiner 43, a greatest value determiner 44, a smallest value determiner 45, a subtractor 46, adders 47 and 52 to 54, a selector 48, and multipliers 49 to 51. It is noted that the magnitude determiner 43 corresponds to an example of the output amplitude determination unit.

The area determiner 41 determines the area of the areas A to F (see FIG. 2) which corresponds to the phase state of the line-to-line current commands Iuw*, Ivu*, and Iwv*. The area determiner 41 determines such the area based on the phase of the line-to-line current command Iuw*. It is noted that the area determination in the area determiner 41 may be made based on any of the line-to-line current commands Ivu* and Iwv* and the phase current voltage commands Iu*, Iv*, and Iw* or on a phase $\theta_{Iout}$ of the current command vector $I_{out-r}$ (see FIG. 3). It is noted that the area determiner 41 corresponds to an example of the area determination unit.

The zero vector determiner 42 determines, based on a determination table that is set therein, two zero vectors corresponding to the area determined by the area determiner 41 and notifies the magnitude determiner 43 of the determination result. The zero vector determiner 42 determines a first zero vector and a second zero vector as the two zero vectors.

The first zero vector and the second zero vector are zero vectors that correspond to two target output phases that are the candidates for the short-circuit mode set by the first switch drive signals S*. Specifically, the first zero vector is a zero vector that is selected when it is in a state where the carrier signal Vc described later is smaller than all of the corrected line-to-line current commands Iuw**, Ivu**, and Iwv**. Further, the second zero vector is a zero vector that is selected when it is in a state where the carrier signal Vc is greater than all of the corrected line-to-line current commands Iuw**, Ivu**, and Iwv**. That is, based on the determination table that is set inside, the zero vector determiner 42 determines two output phases that are the target candidates for the short-circuit mode which correspond to the area determined by the area determiner 41. The zero vector determiner 42 corresponds to an example of the output phase determination unit.

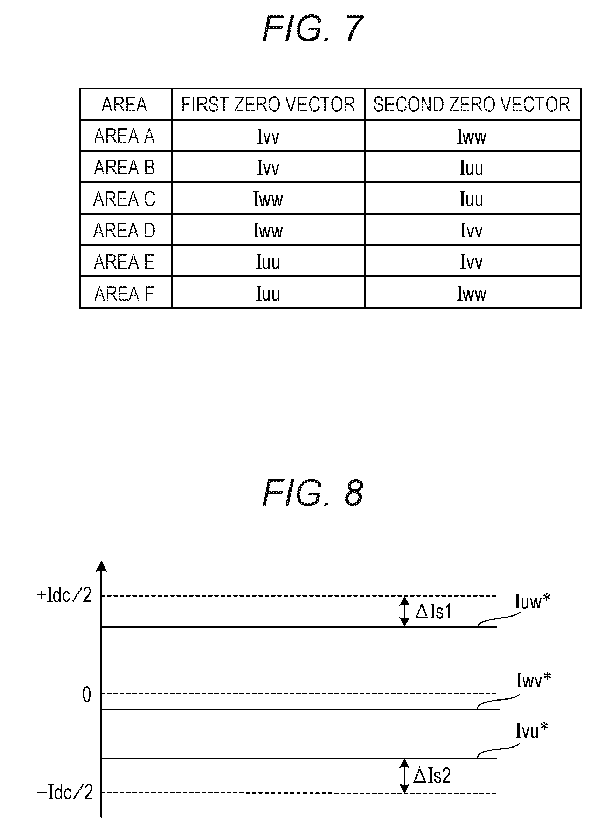

FIG. 7 is a diagram illustrating an example of the determination table. For example, when the area determined by the area determiner 41 is the area A, the zero vector determiner 42 determines that the first zero vector is the current vector Ivv and the second zero vector is the current vector Iww based on the determination table illustrated in FIG. 7. It is noted that, while the example in which the zero vector is determined by using the determination table has been described, the zero vector may be determined by the logic circuit and the like instead, for example.

The magnitude determiner 43 outputs a determination result Ka based on the phase voltage detection values Vu, Vv, and Vw to the selector 48 and the multipliers 49 to 51. When the amplitude of the phase voltage is less than the first predetermined value, the magnitude determiner 43 outputs "0" as the determination result Ka. It is noted that the amplitude of the phase voltage is detected based on at least any one of the phase voltage detection values Vu, Vv, and Vw.

On the other hand, when the amplitude of the phase voltage is greater than the first predetermined value, the magnitude determiner 43 determines the magnitude relationship among the magnitudes of the phase voltage detection values of the phase voltage detection values Vu, Vv, and Vw for the phases which correspond to the first zero vector and the second zero vector. When the magnitude of the phase voltage detection value corresponding to the first zero vector is less than the magnitude of the phase voltage detection value corresponding to the second zero vector, the magnitude determiner 43 outputs "+1" as the determination result Ka and otherwise outputs "-1" as the determination result Ka.

For example, when the first zero vector is the current vector Ivv and the second zero vector is the current vector Iww, the phase corresponding to the first zero vector is the V phase and the second zero vector corresponding to the second zero vector is the W phase. In this case, when the magnitude of the phase voltage detection value Vv is less than the magnitude of the phase voltage detection value Vw, the magnitude determiner 43 outputs "+1" as the determination result Ka and otherwise outputs "-1" as the determination result Ka.

The greatest value determiner 44 selects and outputs the line-to-line current command having the greatest value (hereafter, referred to as the greatest line-to-line current command) out of the line-to-line current commands Iuw*, Ivu*, and Iwv* inputted from the current command generator 22. For example, in the area A, the greatest line-to-line current command is the line-to-line current command Iuw*, as illustrated in FIG. 2. In this case, the greatest value determiner 44 selects and outputs the line-to-line current command Iuw* as the greatest line-to-line current command.

The subtractor 46 subtracts the greatest line-to-line current command outputted from the greatest value determiner 44 from a current value Idc/2 to generate a first offset ΔIs1. The subtractor 46 outputs the first offset ΔIs1 to the selector 48. It is noted that the current value Idc/2 is one-half the current value Idc of the direct current source 2.

The smallest value determiner 45 selects and outputs the line-to-line current command having the smallest value (hereafter, referred to as the smallest line-to-line current command) out of the line-to-line current commands Iuw*, Ivu*, and Iwv* inputted from the current command generator 22. For example, in the area A, the smallest line-to-line current command is the line-to-line current command Ivu*, as illustrated in FIG. 2. In this case, the smallest value determiner 45 selects and outputs the line-to-line current command Ivu* as the smallest line-to-line current command.

The adder 47 adds the smallest line-to-line current command outputted from the smallest value determiner 45 to the current value Idc/2 to generate a second offset ΔIs2. The adder 47 outputs the second offset ΔIs2 to the selector 48.

FIG. 8 is a diagram for illustrating the relationship among the line-to-line current commands Iuw*, Ivu*, and Iwv*, the first offset ΔIs1, and the second offset ΔIs2. When the line-to-line current commands Iuw*, Ivu*, and Iwv* are in the state illustrated in FIG. 8, the greatest line-to-line current command is the line-to-line current command Iuw*.

Therefore, the first offset ΔIs1 is the value derived by subtracting the line-to-line current command Iuw* from the current value Idc/2. Further, the smallest line-to-line current command is the line-to-line current command Ivu*. Therefore, the second offset ΔIs2 is the value derived by adding the current value Idc/2 to the line-to-line current command Ivu*.

Turning back to FIG. 6, the description of the configuration of the current command corrector 31 will be continued. The selector 48 selects one of the first offset ΔIs1 and the second offset ΔIs2 based on the determination result Ka inputted from the magnitude determiner 43. The selector 48 outputs the selected offset to the multipliers 49 to 51 as an offset ΔIs.

Specifically, the selector 48 outputs the first offset ΔIs1 to the multipliers 49 to 51 when the determination result Ka inputted from the magnitude determiner 43 is "+1". On the other hand, the selector 48 outputs the second offset ΔIs2 to the multipliers 49 to 51 when the determination result Ka inputted from the magnitude determiner 43 is "-1".

The multipliers 49 to 51 multiply the offset ΔIs inputted from the selector 48 by the determination result Ka inputted from the magnitude determiner 43. The multipliers 49 to 51 output these multiplied results Kb (= Ka × ΔIs) to the adders 52 to 54. For example, when "+1" is inputted as the determination result Ka from the magnitude determiner 43, the multipliers 49 to 51 output the multiplied results Kb (= ΔIs1) that are the same value as the first offset ΔIs1.

On the other hand, when "-1" is inputted as the determination result Ka from the magnitude determiner 43, the multipliers 49 to 51 output the multiplied results Kb (= -ΔIs2) that are the inversed second offset ΔIs2. Further, when the "0" is inputted as the determination result Ka from the magnitude determiner 43, the multipliers 49 to 51 output the multiplied results Kb that are zero.

The adders 52 to 54 add the multiplied results Kb outputted by the multipliers 49 to 51 to the line-to-line current commands Iuw*, Ivu*, and Iwv* inputted from the current command generator 22. The adders 52 to 54 output the added results as the corrected line-to-line current commands Iuw**, Ivu**, and Iwv** to the comparator 33. Specifically, the adder 52 adds the multiplied result Kb outputted by the multiplier 49 to the line-to-line current command Iuw* to generate the corrected line-to-line current command Iuw** and output it to the comparator 33.

Further, the adder 53 adds the multiplied result Kb outputted by the multiplier 50 to the line-to-line current command Ivu* to generate the corrected line-to-line current command Ivu** and output it to the comparator 33. Further, the adder 54 adds the multiplied result Kb outputted by the multiplier 51 to the line-to-line current command Iwv* to generate the corrected line-to-line current command Iwv** and output it to the comparator 33.

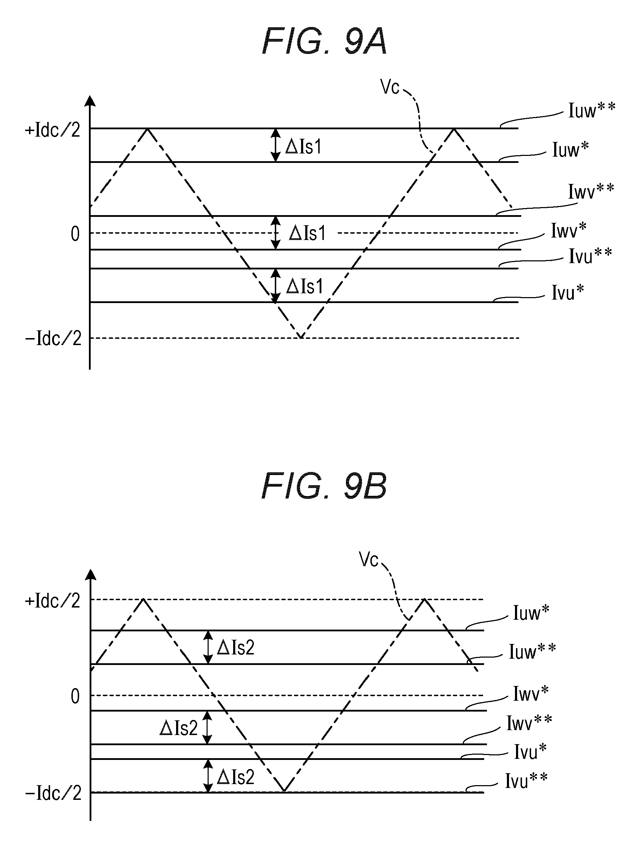

FIG. 9A and FIG. 9B are diagrams illustrating the relationship among the line-to-line current commands Iuw*, Ivu*, and Iwv* and the corrected line-to-line current commands Iuw**, Ivu**, and Iwv**. When the determination result Ka in the magnitude determiner 43 is "+1", the corrected line-to-line current commands Iuw**, Ivu**, and Iwv** are the values that are derived by adding the first offset ΔIs1 to the line-to-line current commands Iuw*, Ivu*, and Iwv*, as illustrated in FIG. 9A. In this way, the current command corrector 31 increases the line-to-line current commands Iuw*, Ivu*, and Iwv* until the line-to-line current command having the greatest value of the line-to-line current commands Iuw*, Ivu*, and Iwv* matches the peak value of the carrier signal Vc to generate the corrected line-to-line current commands Iuw**, Ivu**, and Iwv**.

As set forth, when the target output phase of the short-circuit mode (that is, the phases corresponding to the first zero vector) when the carrier signal Vc is smaller than all of the line-to-line current commands Iuw*, Ivu*, and Iwv* is the output phase which has the smaller phase voltage of two target output phases that are the candidates for the short-circuit mode (that is, when Ka = +1), the current command corrector 31 increases the plurality of line-to-line current commands Iuw*, Ivu*, and Iwv* until the greatest line-to-line current command of the plurality of line-to-line current commands Iuw*, Ivu*, and Iwv* matches the peak value of the carrier signal Vc.

Further, when the determination result Ka in the magnitude determiner 43 is "-1", the corrected line-to-line current commands Iuw**, Ivu**, and Iwv** are the values that are derived by subtracting the second offset ΔIs2 from the line-to-line current commands Iuw*, Ivu*, and Iwv*, as illustrated in FIG. 9B. In this way, the current command corrector 31 decreases the line-to-line current commands Iuw*, Ivu*, and Iwv* until the line-to-line current command having the smallest value of the line-to-line current commands Iuw*, Ivu*, and Iwv* matches the bottom value of the carrier signal Vc to generate the corrected line-to-line current commands Iuw**, Ivu**, and Iwv**.

As set forth, in the case where the target output phase of the short-circuit mode (that is, the phase corresponding to the second zero vector) when the carrier signal Vc is greater than all of the line-to-line current commands Iuw*, Ivu*, and Iwv* is the output phase which has the smaller phase voltage of two target output phases that are the candidates for the short-circuit mode (that is, when Ka = -1), the current command corrector 31 decreases the plurality of line-to-line current commands Iuw*, Ivu*, and Iwv* until the smallest line-to-line current command of the plurality of line-to-line current commands Iuw*, Ivu*, and Iwv* matches the bottom value of the carrier signal Vc.

On the other hand, when the amplitude of the phase voltage is less than the first predetermined value, the determination result Ka in the magnitude determiner 43 is "0" and the corrected line-to-line current commands Iuw**,

Ivu**, and Iwv** are of the same values as the line-to-line current commands Iuw*, Ivu*, and Iwv*.

[2. 3. Carrier signal generator 32 and comparator 33]

Turning back to FIG. 4, the description of the configuration of the drive signal generator 23 will be continued. The carrier signal generator 32 generates the carrier signal Vc and outputs it to the comparator 33. The comparator 33 compares the corrected line-to-line current commands Iuw**, Ivu**, and Iwv** with the carrier signal Vc to generate the PWM pulse signals Suw, Svu, and Swv.
The comparator 33 outputs the generated PWM pulse signals Suw, Svu, and Swv to the signal generator 35. It is noted that, while the carrier signal Vc here is the triangular wave signal, the carrier signal Vc is not limited to it but may be the saw-tooth wave, for example.

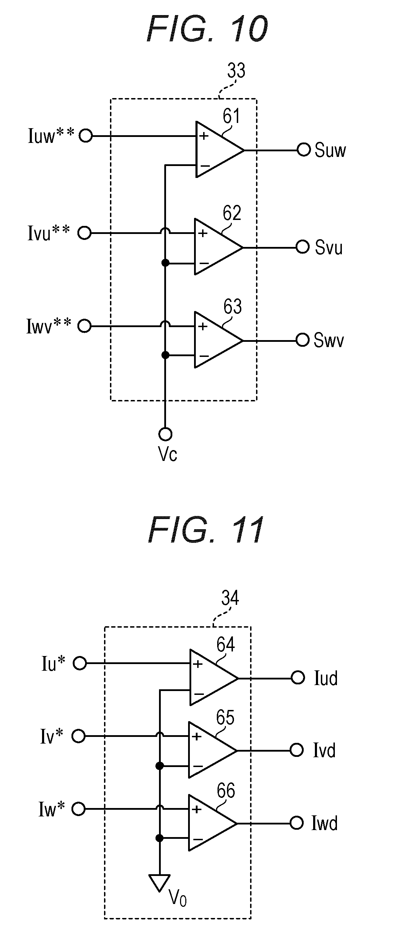

FIG. 10 is a diagram illustrating a configuration example of the comparator 33. As illustrated in FIG. 10, the comparator 33 has comparators 61 to 63. The comparator 61 outputs a High PWM pulse signal Suw when the corrected line-to-line current command Iuw** is greater than or equal to the value of the carrier signal Vc. On the other hand, the comparator 61 outputs a Low PWM pulse signal Suw when the corrected line-to-line current command Iuw** is less than the value of the carrier signal Vc.
Further, the comparator 62 outputs a High PWM pulse signal Svu when the corrected line-to-line current command Ivu** is greater than or equal to the value of the carrier signal Vc. On the other hand, the comparator 62 outputs a Low PWM pulse signal Svu when the corrected line-to-line current command Ivu** is less than the value of the carrier signal Vc. Further, the comparator 63 outputs a High PWM pulse signal Swv when the corrected line-to-line current command Iwv** is greater than or equal to the value of the carrier signal Vc. On the other hand, the comparator 63 outputs a Low PWM pulse signal Swv when the corrected line-to-line current command Iwv** is less than the value of the carrier signal Vc.

[2. 4. Polarity determiner 34]

Turning back to FIG. 4, the description of the configuration of the drive signal generator 23 will be continued. The polarity determiner 34 determines the polarities of the phase current commands Iu*, Iv*, and Iw* and generates phase current polarity signals Iud, Ivd, and Iwd corresponding to the polarities of the phase current commands Iu*, Iv*, and Iw*, respectively. The polarity determiner 34 then outputs the phase current polarity signals Iud, Ivd, and Iwd to the signal generator 35.
FIG. 11 is a diagram illustrating a configuration example of the polarity determiner 34. As illustrated in FIG. 11, the polarity determiner 34 has three comparators 64 to 66. Respective comparators 64 to 66 compare the phase current commands Iu*, Iv*, and Iw* with a zero voltage $V_0$.
The comparator 64 outputs a High phase current polarity signal Iud when the phase current command Iu* is greater than or equal to the zero voltage $V_0$. On the other hand, the comparator 64 outputs a Low phase current polarity signal Iud when the phase current command Iu* is less than the zero voltage $V_0$. The comparator 65 outputs a High phase current polarity signal Ivd when the phase current command Iv* is greater than or equal to the zero voltage $V_0$. On the other hand, the comparator 64 outputs a Low phase current polarity signal Ivd when the phase current command Iv* is less than the zero voltage $V_0$. The comparator 66 outputs a High phase current polarity signal Iwd when the phase current command Iw* is greater than or equal to the zero voltage $V_0$. On the other hand, the comparator 64 outputs a Low phase current polarity signal Iwd when the phase current command Iw* is less than the zero voltage $V_0$.

[2. 5. Signal generator 35]

Turning back to FIG. 4, the description of the configuration of the drive signal generator 23 will be continued. The signal generator 35 generates the first switch drive signals Sup*, Sun*, Svp*, Svn*, Swp*, and Swn* based on the PWM pulse signals Suw, Svu, and Swv and the phase current polarity signals Iud, Ivd, and Iwd.
The first switch drive signals Sup* and Sun* are the signals for driving the switching elements 11a and 11b in the U phase, respectively. Further, the first switch drive signals Svp* and Svn* are the signals for driving the switching elements 11c and 11d in the V phase, respectively. Further, the first switch drive signals Swp* and Swn* are the signals for driving the switching elements 11e and 11f in the W phase, respectively.

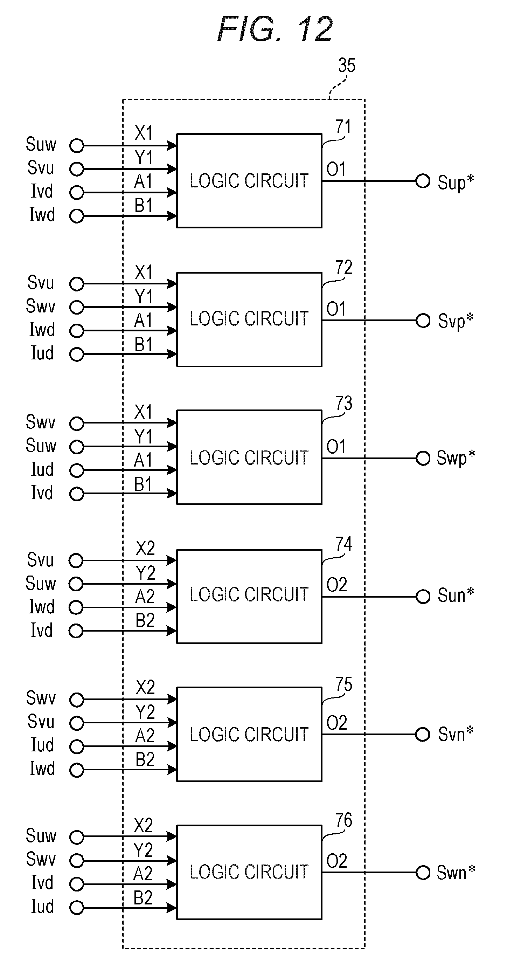

FIG. 12 is a diagram illustrating a configuration example of the signal generator 35. As illustrated in FIG. 12, the signal generator 35 has logic circuits 71 to 76. The internal logic of the logic circuits 71 to 73 is expressed by the following equation (6). Further, the internal logic of the logic circuits 74 to 76 is expressed by the following equation (7). It is noted that, in the following equations (6) and (7), the symbol " " represents inversion.

$$O1 = \overline{A1} \cdot B1 \cdot X1 + A1 \cdot \overline{B1} \cdot \overline{Y1} + \overline{A1} \cdot \overline{B1} \cdot X1 \cdot \overline{Y1} \qquad \cdots \quad (6)$$

$$O2 = A2 \cdot \overline{B2} \cdot X2 + \overline{A2} \cdot B2 \cdot \overline{Y2} + A2 \cdot B2 \cdot X2 \cdot \overline{Y2} \qquad \cdots \quad (7)$$

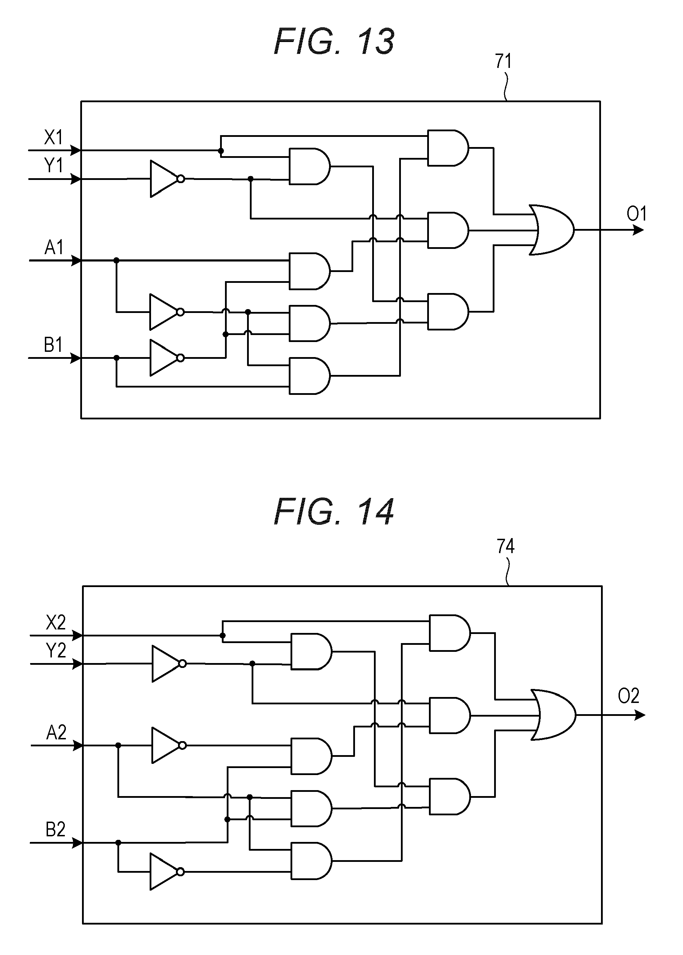

The logic circuit 71 can be configured by the circuit illustrated in FIG. 13, for example. FIG. 13 is a diagram illustrating a configuration example of the logic circuit 71. Further, the logic circuits 72 and 73 can be configured by the same circuit as the logic circuit 71. In the logic circuit 71 illustrated in FIG. 13, the internal logic expressed by the above equation (6) is configured by NOT circuits, AND circuits, and an OR circuit.

The logic circuit 74 can be configured by the circuit illustrated in FIG. 14, for example. FIG. 14 is a diagram illustrating a configuration example of the logic circuit 74. Further, the logic circuits 75 and 76 can be configured by the same circuit as the logic circuit 74. In the logic circuit 74 illustrated in FIG. 14, the internal logic expressed by the above equation (7) is configured by NOT circuits, AND circuits, and an OR circuit.

[2. 6. Zero vector selector 36]

Turning back to FIG. 4, the description of the configuration of the drive signal generator 23 will be continued. When the first switch drive signals S* are the switch drive signals for applying the short-circuit mode, the zero vector selector 36 outputs the second switch drive signals S** for applying the short-circuit mode in place of the first switch drive signals S* to the output phase having the smallest absolute value of the phase voltage. On the other hand, when the first switch drive signals S* generated by the signal generator 35 are not the switch drive signals for applying the short-circuit mode, the zero vector selector 36 outputs the first switch drive signals S*.

In the followings, for the purpose of illustration, the switch drive signals outputted from the zero vector selector 36 are denoted as switch drive signals Sup1*, Sun1*, Svp1*, Svn1*, Swp1*, and Swn1*. Further, the switch drive signals Sup1*, Sun1*, Svp1*, Svn1*, Swp1*, and Swn1* may be collectively referred to as switch drive signals Sup1.

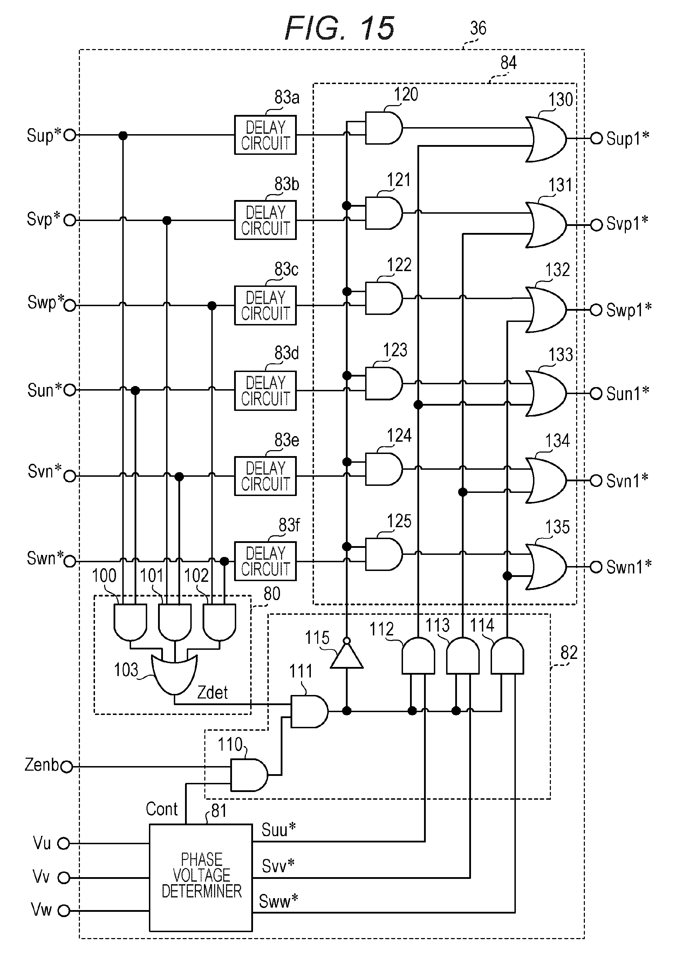

FIG. 15 is a diagram illustrating a configuration example of the zero vector selector 36. The zero vector selector 36 has a zero vector detector 80, a phase voltage determiner 81, an operation controller 82, delay circuits 83a to 83f (hereafter, collectively referred to as delay circuits 83), and a switch drive signal selector 84, as illustrated in FIG. 15.

The zero vector detector 80 determines whether or not the first switch drive signals S* are the switch drive signals for applying the short-circuit mode. When the first switch drive signals S* are the switch drive signal for applying the short-circuit mode to any of the U phase, V phase, and W phase, the zero vector detector 80 outputs a High level zero vector detection signal Zdet. On the other hand, when the first switch drive signals S* are not the switch drive signals for applying the short-circuit mode to any of the U phase, V phase, and W phase, the zero vector detector 80 outputs a Low level zero vector detection signal Zdet.

Specifically, the zero vector detector 80 has AND circuits 100 to 102 and an OR circuit 103. The AND circuit 100 is inputted with the switch drive signals Sup* and Sun* and, when both of the switch drive signals Sup* and Sun* are in the High level, outputs a High level signal. The AND circuit 101 is inputted with the switch drive signals Svp* and Svn* and, when both of the switch drive signals Svp* and Svn* are in the High level, outputs a High level signal. The AND circuit 102 is inputted with the switch drive signals Swp* and Swn* and, when both of the switch drive signals Swp* and Swn* are in the High level, outputs a High level signal. The OR circuit 103 outputs a High level zero vector detection signal Zdet in response that the High level signal is outputted from any one of the AND circuits 100 to 102. It is noted that the zero vector detector 80 is not limited to the configuration illustrated in FIG. 15 as long as it is able to determine whether or not the first switch drive signals S* are the switch drive signals for applying the short circuit mode.

The phase voltage determiner 81 determines whether or not the amplitude of the output voltage is less than the second predetermined value based on the phase voltage detection values Vu, Vv, and Vw. When the amplitude of the output voltage is less than the second predetermined value, the phase voltage determiner 81 outputs a Low level control signal Cont to the operation controller 82. On the other hand, when the amplitude of the output voltage is greater than or equal to the second predetermined value, the phase voltage determiner 81 outputs a High level control signal Cont to the operation controller 82. It is noted that the phase voltage determiner 81 may determine whether or not the amplitude of the output voltage is less than the second predetermined value based also on the determination result of the magnitude determiner 43 of the current command corrector 31.

Further, when the amplitude of the output voltage is greater than or equal to the second predetermined value, the phase voltage determiner 81 determines the phase having the smallest absolute value of the phase voltage based on the phase voltage detection values Vu, Vv, and Vw. Of the zero vector commands Suu*, Svv*, and Sww*, the phase voltage determiner 81 sets the zero vector command corresponding to the phase having the smallest absolute value of the phase voltage to the High level and outputs it to the operation controller 82.

Specifically, when determining that the phase having the smallest absolute value of the phase voltage is the U phase, the phase voltage determiner 81 outputs a High level zero vector command Suu*. When determining that the phase having the smallest absolute value of the phase voltage is the V phase, the phase voltage determiner 81 outputs a High level zero vector command Svv*. When determining that the phase having the smallest absolute value of the phase voltage is the W phase, the phase voltage determiner 81 outputs a High level zero vector command Sww*.

The operation controller 82 determines whether or not to switch the first switch drive signals S* to the second switch drive signals S** based on the zero vector detection signal Zdet, the zero vector commands Suu*, Svv*, and Sww*, and the control signal Cont, and an enable signal Zenb. When the zero vector detection signal Zdet, the enable signal Zenb, and the control signal Cont are in the High level, the operation controller 82 outputs the zero vector commands Suu*, Svv*, and Sww* to the switch drive signal selector 84. The enable signal Zenb is an example of the predetermined control signal for controlling the implementation and stop of the switching from the first switch drive signals S* to the second switch drive signals S**. For example, a setting part (not shown) provided to the drive controller 20 generates the enable signal Zenb based on the parameter that is set inside.

Specifically, the operation controller 82 has AND circuits 110 to 114 and a NOT circuit 115. The AND circuit 110 is inputted with the control signal Cont and the enable signal Zenb and, when both of the control signal Cont and the enable signal Zenb are in the High level, outputs the High level signal. When the zero vector detection signal Zdet is in the High level and the output from the AND circuit 110 is in the High level, the AND circuit 111 outputs the High level signal.

When the High level signal is outputted from the AND circuit 111, the AND circuits 112 to 114 output the zero vector commands Suu*, Svv*, and Sww* to the switch drive signal selector 84, respectively. On the other hand, when the Low level signal is outputted from the AND circuit 111, the AND circuits 112 to 114 output the Low level signal to the switch drive signal selector 84. When the High level signal is outputted from the AND circuit 111, the NOT circuit 115 outputs the Low level signal. On the other hand, when the Low level signal is outputted from the AND circuit 111, the NOT circuit 115 outputs the High level signal.

The delay circuits 83 delay the first switch drive signals S* and output them to the switch drive signal selector 84. Specifically, the delay circuit 83a delays the switch drive signal Sup*. The delay circuit 83b delays the switch drive signal Svp*. The delay circuit 83c delays the switch drive signal Swp*. The delay circuit 83d delays the switch drive signal Sun*. The delay circuit 83e delays the switch drive signal Svn*. The delay circuit 83f delays the switch drive signal Swn*.

In this way, the first switch drive signals S* are delayed by the delay circuits 83, so that the delay generated by the zero vector detector 80 and the operation controller 82 can be cancelled. It is noted that, when the delay generated by the zero vector detector 80 and the operation controller 82 does not cause any problem, the delay circuits 83 may not be provided.

When the first switch drive signals S* are the drive signals for applying the short-circuit mode, the switch drive signal selector 84 outputs the second switch drive signals S** for applying the short-circuit mode to the output phase having the smallest absolute value of the phase voltage in place of the first switch drive signals S*.

Specifically, the switch drive signal selector 84 has AND circuits 120 to 125 and OR circuits 130 to 135. The AND circuits 120 to 125 are inputted with the output signal from the NOT circuit 115 and the first switch drive signals S* from the delay circuits 83. The AND circuits 120 to 125 output the first switch drive signals S* when the High level signal is inputted from the NOT circuit 115. On the other hand, the AND circuits 120 to 125 output the Low level signals S* when the Low level signal is inputted from the NOT circuit 115.

The OR circuits 130 to 135 output the first switch drive signals S* and the second switch drive signals S** based on the output signals from the AND circuits 120 to 125 and the output signal from the operation controller 82. When the High level signal is inputted from the NOT circuit 115, the Low level signal is outputted from the AND circuits 112 to 114. Therefore, the OR circuits 130 to 135 output the first switch drive signals S* as the switch drive signals S1*. On the other hand, when the Low level signal is inputted from the NOT circuit 115, the zero vector commands Suu*, Svv*, and Sww* are outputted from the AND circuits 112 to 114 and the Low level signals are outputted from the AND circuits 120 to 125. Therefore, the OR circuits 130 and 135 output the second switch drive signals S** as the switch drive signals S1*.

[2. 7. Off-delay circuits 37a to 37f]

Turning back to FIG. 4, the description of the configuration of the drive signal generator 23 will be continued. The off-delay circuits 37a to 37f delay the first switch drive signals S* or the second switch drive signals S** inputted from the signal generator 35 to generate the switch drive signals Sup, Sun, Svp, Svn, Swp, and Swn. The off-delay circuits 37a to 37f output the generated switch drive signals Sup, Sun, Svp, Svn, Swp, and Swn to the drive circuits 13a to 13f.

In this way, the turning-off of the switching elements 11 can be delayed by the delayed switch drive signals Sup, Sun, Svp, Svn, Swp, and Swn. Therefore, it can be suppressed that the output of the direct current source 2 is opened due to the delay in the turning-on operation of the switching elements 11.

[2. 7. Operation of drive signal generator 23]

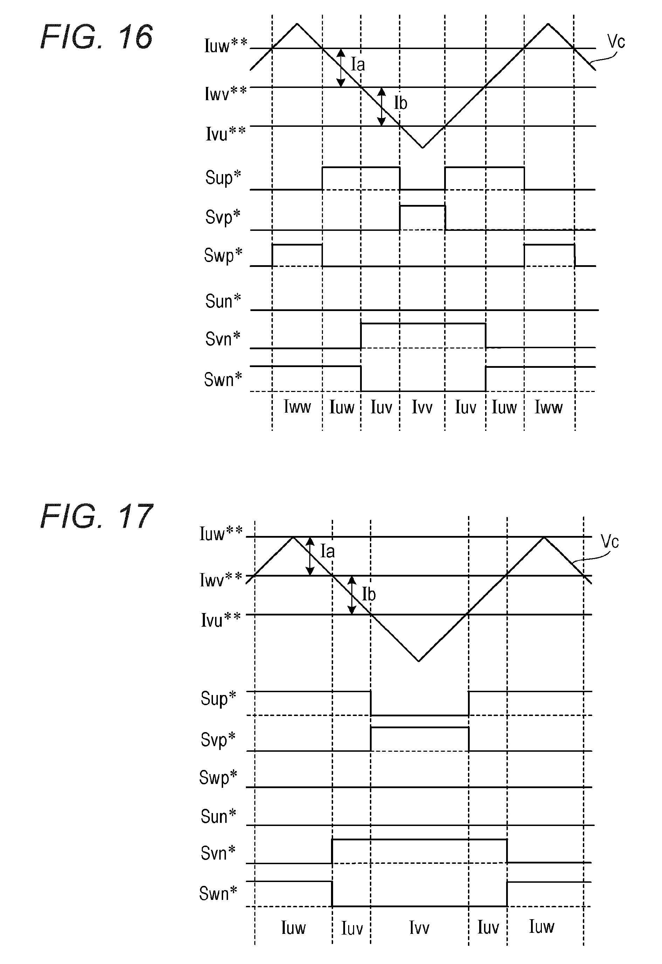

Described will be an example of the operation of the drive signal generator 23 configured as described above. FIG. 16 to FIG. 18 are diagrams illustrating the relationship among the corrected line-to-line current commands Iuw**, Ivu**, and Iwv**, the carrier signal Vc, and the first switch drive signals Sup*, Sun*, Svp*, Svn*, Swp*, and Swn*. The directional components Ia and Ib of the current command vector $I_{out\_r}$ at the time t1 illustrated in FIG. 2 are represented by the magnitudes of the vector Ia and the vector Ib in FIG. 16 to FIG. 18, respectively.

When the amplitude of the output voltage is less than the first predetermined value, the line-to-line current commands Iuw*, Ivu*, and Iwv* are not corrected by the current command corrector 31 and outputted as they stand. In this case, the orders of the current vectors outputted during one period of the carrier signal Vc are expressed as follows for respective areas A to F.

Iww → Iuw → Iuv → Ivv → Iuv → Iuw → Iww (Area A)

Iuu → Iuw → Ivw → Ivv → Ivw → Iuw → Iuu (Area B)

Iuu → Ivu → Ivw → Iww → Ivw → Ivu → Iuu (Area C)

Ivv → Ivu → Iwu → Iww → Iwu → Ivu → Ivv (Area D)

Ivv → Iwv → Iwu → Iuu → Iwu → Iwv → Ivv (Area E)

Iww → Iwv → Iuv → Iuu → Iuv → Iwv → Iww (Area F)

In this way, in respective areas A to F, respective two effective vectors and two zero vectors are outputted during one period of the carrier signal Vc. For example, in the area A, when the amplitude of the output voltage is less than the first predetermined value, the first switch drive signals Sup*, Sun*, Svp*, Svn*, Swp*, and Swn* are as illustrated in FIG. 16.

On the other hand, when the amplitude of the output voltage is greater than or equal to the first predetermined value, the line-to-line current commands Iuw*, Ivu*, and Iwv* are corrected in the current command corrector 31. In this case, in respective areas A to F, respective two effective vectors and one zero vector are outputted during one period of the carrier signal Vc. The orders of the current vectors outputted during one period of the carrier signal Vc are expressed as follows for respective areas A to F.

Iww → Iuw → Iuv → Iuw → Iww (Area A: Vw < Vv)

Iuw → Iuv → Ivv → Iuv → Iuw (Area A: Vw ≥ Vv)

Iuu → Iuw → Ivw → Iuw → Iuu (Area B: Vu < Vv)

Iuw → Ivw → Ivv → Ivw → Iuw (Area B: Vu ≥ Vv)

Iuu → Ivu → Ivw → Ivu → Iuu (Area C: Vu < Vw)

Ivu → Ivw → Iww → Ivw → Ivu (Area C: Vu ≥ Vw)

Ivv → Ivu → Iwu → Ivu → Ivv (Area D: Vv < Vw)

Ivu → Iwu → Iww → Iwu → Ivu (Area D: Vv ≥ Vw)

Ivv → Iwv → Iwu → Iwv → Ivv (Area E: Vv < Vu)

Iwv → Iwu → Iuu → Iwu → Iwv (Area E: Vv ≥ Vu)

Iww → Iwv → Iuv → Iwv → Iww (Area F: Vw < Vu)

Iwv → Iuv → Iuu → Iuv → Iwv (Area F: Vw ≥ Vu)

For example, it is assumed that, in the area A, the amplitude of the output voltage is greater than or equal to the first predetermined voltage and the magnitude of the phase voltage detection value Vv corresponding to the zero vector Ivv is less than that of the phase voltage detection value Vw corresponding to the zero vector Iww. In this case, as illustrated in FIG. 17, the first switch drive signals S* corresponding to the zero vector Ivv is outputted from the signal generator 35 for every period of the carrier signal Vc. In this case, when the zero vector Ivv does not correspond to the zero vector corresponding to the phase having the smallest absolute value of the phase voltage, the zero vector selector 36 switches by itself the first switch drive signals S* to the second switch drive signals S** for implementing the zero vector Iuu. Thereby, since the switch drive signals Sup and Sun become High level, while the zero vector Iuu is outputted, the zero vectors Ivv and Iww are not outputted.

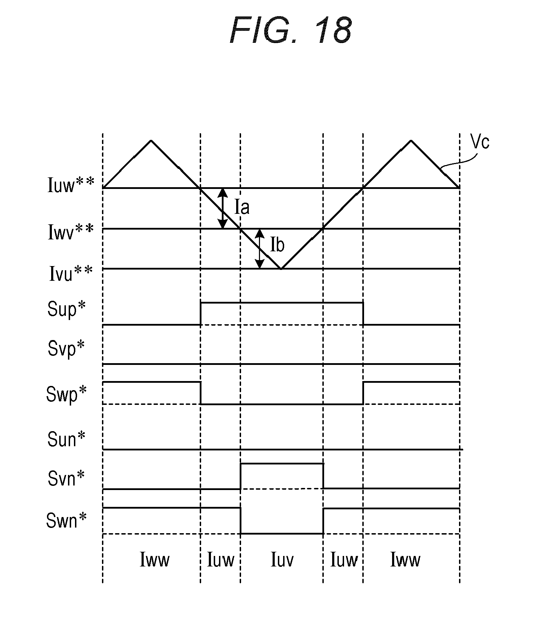

Further, it is assumed that, in the area A, the amplitude of the output voltage is greater than or equal to the second predetermined voltage and the magnitude of the phase voltage detection value Vw corresponding to the zero vector Iww is less than that of the phase voltage detection value Vv corresponding to the zero vector Ivv. In this case, as illustrated in FIG. 18, the first switch drive signals S* corresponding to the zero vector Iww is outputted from the signal generator 35 for every period of the carrier signal Vc. In this case, when the zero vector Iww does not correspond to the zero vector corresponding to the phase having the smallest absolute value of the phase voltage, the zero vector selector 36 switches by itself the first switch drive signals S* to the second switch drive signals S** for implementing the zero vector Iuu. Thereby, since the switch drive signals Sup and Sun become High level, while the zero vector Iuu is outputted, the zero vectors Ivv and Iww are not outputted.

In this way, the drive signal generator 23 corrects the line-to-line current commands Iuw*, Ivu*, and Iwv* to output the zero vector for every period of the carrier signal Vc in respective areas A to F. Thereby, the change in the output period of the zero vector is suppressed, so that the significant change of the frequency component in the current ripple is suppressed. Further, the drive signal generator 23 outputs the zero vector which corresponds to the phase having the smallest absolute value of the phase voltage only. This allows for the reduction in the amplitude of the common mode voltage. Therefore, the change in the common mode voltage at the transition from the short-circuit mode to the output mode can be suppressed.

As set forth, the current source power conversion apparatus 1 corrects the line-to-line current commands Iuw*, Ivu*, and Iwv* to suppress the change in the output period of the zero vector. Furthermore, in the short-circuit mode, the zero vector which corresponds to the phase having the smallest absolute value of the phase voltage is selected out of the three zero vectors. Therefore, this allows for the reduction in the amplitude of the common mode voltage at the short-circuit mode, while suppressing the change in the frequency component in the current ripple. Thus, the change in the common mode voltage at the transition from the short-circuit mode to the output mode can be suppressed.

Further, the signal generator 35 of the current source power conversion apparatus 1 corrects the line-to-line current commands so that, of two zero vectors, the zero vector whose absolute value of the corresponding phase voltage detection value is the smaller is outputted. This allows for the suppression of the number of the switching elements 11 which are subjected to the turning on / off control at the switching between the zero vector and the effective vector. For example, it is assumed that the phase state of the phase current commands Iu*, Iv*, and Iw* is in the area A (see FIG. 2 and FIG. 3) and Vw < Vv. In this case, the switching between the zero vector and the effective vector is Iww → Iuw or Iuw → Iww. Therefore, the turning on / off states of two switching elements 11a and 11e are switched. Thus, the number of the switching elements 11 which are subjected to the turning on / off control can be suppressed compared to the case of Ivv → Iuw or Iuw → Ivv.

It is noted that, in the above description, while the amplitude of the common mode voltage at the short-circuit mode is reduced by the direct correction of the line-to-line current commands, this correction can be any correction as long as it is the correction of the line-to-line current commands with respect to the carrier signal Vc, and may be a correction for increasing or decreasing the carrier signal Vc.

Further, in the above description, switched are the process of using two zero vectors defined for each area depending on whether or not the amplitude of the output voltage is greater than or equal to the predetermined value and the process of one zero vector corresponding to the phase having the smallest absolute value of the phase voltage. The reason for switching the processes in this way is that the common mode voltage is small when the amplitude of the output voltage is small. By setting the first and second predetermined values to zero, however, the process of using one zero vector corresponding to the phase having the smallest absolute value of the phase voltage can be made regardless of the magnitude of the amplitude of the output voltage.

It is noted that the current command corrector 31 corresponds to an example of the current command correction unit, the signal generator 35 corresponds to an example of the signal generation unit, and the zero vector selector 36 corresponds to an example of the selector unit. The magnitude determiner 43 corresponds to an example of the output amplitude determination unit. The area determiner 41 corresponds to an example of the area determination unit. The zero vector determiner 42 corresponds to the output phase determination unit. The voltage detector 21 corresponds to an example of the voltage detection unit.

Further advantages and modified examples can be readily derived by those skilled in the art. Therefore, the forms broader than the technique of the present disclosure are not limited to the specific details represented and described above and the illustrative embodiments. Therefore, various modifications are possible without departing from the spirit and scope of the encompassing concept defined by the appended claims and their equivalents.

The foregoing detailed description has been presented for the purposes of illustration and description. Many modifications and variations are possible in light of the above teaching. It is not intended to be exhaustive or to limit the subject matter described herein to the precise form disclosed. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims appended hereto.

**Claims**

**1.** A current source power conversion apparatus (1) comprising:

an inverter unit (10) having a plurality of switching elements connected in series for each output phase between a positive terminal and a negative terminal of a direct current source (2); and

a drive control unit (20) configured to control the inverter unit based on line-to-line current commands (Iuw*, Ivu*, Iwv*) by an output mode for turning on the switching elements (11a to 11f) of different phases and supplying current between output inter-phases and a short-circuit mode for turning on the plurality of switching elements of a same output phase,

wherein the drive control unit includes:

a current command correction unit (31) configured to increase or decrease a plurality of line-to-line current commands with respect to the carrier signal so that all of the plurality of line-to-line current commands to different output inter-phases are greater than or equal to a bottom value or less than or equal to a peak value of a carrier signal (Vc);

a signal generation unit configured to generate first drive signals (Sup*, Sun*, Svp*, Svn*, Swp*, Swn*) for respectively driving the plurality of switching elements so that a target output phase of the short-circuit mode differs between a case of a state where all of the plurality of line-to-line current commands are smaller than the carrier signal and a case of a state where all of the plurality of line-to-line current commands are greater than the carrier signal; and

a selector unit configured to generate second drive signals (Sup**, Sun**, Svp**, Svn**, Swp**, Swn**) for applying the short-circuit mode to an output phase having the smallest absolute value of a phase voltage when the first drive signals are drive signals for applying the short-circuit mode and switch the first drive signals to the second drive signals.

2. The current source power conversion apparatus according to claim 1, wherein the current command correction unit is configured to increase the plurality of line-to-line current commands until a line-to-line current command having the greatest value of the plurality of line-to-line current commands matches the peak value of the carrier signal, in the case where a target output phase of the short-circuit mode when the carrier signal is smaller than all of the line-to-line current commands is an output phase having the smaller phase output voltage of two output phases that are target candidates for the short-circuit mode.

3. The current source power conversion apparatus according to claim 1 or 2, wherein the current command correction unit is configured to decrease the plurality of line-to-line current commands until a line-to-line current command having the smallest value of the plurality of line-to-line current commands matches the bottom value of the carrier signal, in the case where a target output phase of the short-circuit mode when the carrier signal is greater than all of the line-to-line current commands is an output phase having the smaller phase output voltage of two output phases that are target candidates for the short-circuit mode.

4. The current source power conversion apparatus according to any one of claims 1 to 3, wherein the drive control unit includes a voltage detection unit (21) configured to detect a voltage of each output phase, and wherein the selector unit is configured to determine an output phase corresponding to a phase voltage having the smallest absolute value based on a voltage detected by the voltage detection unit and generate the second drive signals based on the determination result.

5. The current source power conversion apparatus according to any one of claims 1 to 4, wherein the drive control unit includes an output amplitude determination unit (43) configured to determine whether or not a voltage amplitude of the output phase is greater than or equal to a first predetermined value, and wherein the current command correction unit is configured to perform an increase or decrease of the plurality of line-to-line current commands when the voltage amplitude determined by the output amplitude determination unit is greater than or equal to the first predetermined value, and stop the increase or decrease of the plurality of line-to-line current commands when the voltage amplitude determined by the output amplitude determination unit is less than the first predetermined value.

6. The current source power conversion apparatus according to claim 5, wherein the selector unit is configured to perform a switching from the first drive signals to the second drive signals when the voltage amplitude determined by the output amplitude determination unit is greater than or equal to the second predetermined value, and stop the switching from the first drive signals to the second drive signals when the voltage amplitude determined by the output amplitude determination unit is less than the second predetermined value.

**7.** The current source power conversion apparatus according to any one of claims 1 to 6, wherein the selector unit is configured to

perform a switching from the first drive signals to the second drive signals when a predetermined control signal (Zenb) is inputted, and

stop the switching from the first drive signals to the second drive signals when an input of the predetermined control signal is stopped.

**8.** The current source power conversion apparatus according to any one of claims 1 to 7, wherein the selector unit includes delay circuits (83a to 83f) configured to delay the first drive signals inputted from the signal generation unit.

**9.** The current source power conversion apparatus according to any one of claims 1 to 8, wherein the current command correction unit includes:

an area determination unit (41) configured to determine an area corresponding to a phase state of the line-to-line current command in a period of a phase current command; and

an output phase determination unit (42) configured to determine two output phases that are target candidates for the short-circuit mode and that correspond to the area determined by the area determination unit.

**10.** The current source power conversion apparatus according to claim 9, wherein the output phase determination unit is configured to determine the two output phases based on a determination table that is set therein.

**11.** A current source power conversion method including:

increasing or decreasing a plurality of line-to-line current commands (Iuw*, Ivu*, Iwv*) with respect to a carrier signal (Vc) so that all of the plurality of line-to-line current commands outputted to an inverter (10) having a plurality of switching elements (11a to 11f) connected in series provided for each output phase between a positive terminal and a negative terminal of a direct current source (2) are greater than or equal to a bottom value or less than or equal to a peak value of the carrier signal;

generating first drive signals (Sup*, Sun*, Svp*, Svn*, Swp*, Swn*) for respectively driving the plurality of switching elements so that a target output phase of a short-circuit mode for turning on a plurality of switching elements of a same output phase differs between a case of a state where all of the plurality of line-to-line current commands are smaller than the carrier signal and a case of a state where all of the plurality of line-to-line current commands are greater than the carrier signal; and

generating second drive signals (Sup**, Sun**, Svp**, Svn**, Swp**, Swn**) for applying the short-circuit mode to an output phase having the smallest absolute value of a phase voltage when the first drive signals are drive signals for applying the short-circuit mode, and switching the first drive signals to the second drive signals.

# FIG. 1

## FIG. 2

## FIG. 3

## FIG. 4

# FIG. 5

```
                      ┌─────────────┐
                      │    START    │
                      └─────────────┘
                             │
                             ▼
                    ◇───────────────────◇  S10
         NO    IS AMPLITUDE OF
      ◄─────── OUTPUT VOLTAGE FIRST PREDETERMINED
               VALUE OR GREATER?
               │         ◇───────────◇
               │              │ YES
               │              ▼
               │     ┌──────────────────────┐
               │     │  CURRENT COMMAND      │  S11
               │     │  CORRECTION PROCESS   │
               │     └──────────────────────┘
               │              │
               └──────────────┤
                              ▼
                     ┌──────────────────────┐
                     │  COMPARISON PROCESS   │  S12
                     └──────────────────────┘
                              │
                              ▼
                     ┌──────────────────────────┐
                     │ POLARITY DETERMINATION    │  S13
                     │ PROCESS                   │
                     └──────────────────────────┘
                              │
                              ▼
                     ┌──────────────────────────┐
                     │ SIGNAL GENERATION PROCESS │  S14
                     └──────────────────────────┘
                              │
                              ▼
                    ◇───────────────────◇  S15
         NO    IS AMPLITUDE OF
      ◄─────── OUTPUT VOLTAGE SECOND PREDETERMINED
               VALUE OR GREATER?
               │         ◇───────────◇
               │              │ YES
               │              ▼
               │     ┌──────────────────────────┐
               │     │ ZERO VECTOR SWITCHING     │  S16
               │     │ PROCESS                   │
               │     └──────────────────────────┘
               │              │
               └──────────────┤
                              ▼
                      ┌─────────────┐
                      │     END     │
                      └─────────────┘
```

# FIG. 6

## FIG. 7

| AREA | FIRST ZERO VECTOR | SECOND ZERO VECTOR |
|---|---|---|
| AREA A | Ivv | Iww |
| AREA B | Ivv | Iuu |
| AREA C | Iww | Iuu |
| AREA D | Iww | Ivv |
| AREA E | Iuu | Ivv |
| AREA F | Iuu | Iww |

## FIG. 8

## FIG. 9A

## FIG. 9B

## FIG. 10

Iuw** O— 61 —O Suw

Ivu** O— 62 —O Svu

Iwv** O— 63 —O Swv

33

Vc

## FIG. 11

Iu* O— 64 —O Iud

Iv* O— 65 —O Ivd

Iw* O— 66 —O Iwd

34

V0

## FIG. 12

35

Suw ——○—— X1
Svu ——○—— Y1
Ivd ——○—— A1    LOGIC CIRCUIT    71  O1 ——○ Sup*
Iwd ——○—— B1

Svu ——○—— X1
Swv ——○—— Y1
Iwd ——○—— A1    LOGIC CIRCUIT    72  O1 ——○ Svp*
Iud ——○—— B1

Swv ——○—— X1
Suw ——○—— Y1
Iud ——○—— A1    LOGIC CIRCUIT    73  O1 ——○ Swp*
Ivd ——○—— B1

Svu ——○—— X2
Suw ——○—— Y2
Iwd ——○—— A2    LOGIC CIRCUIT    74  O2 ——○ Sun*
Ivd ——○—— B2

Swv ——○—— X2
Svu ——○—— Y2
Iud ——○—— A2    LOGIC CIRCUIT    75  O2 ——○ Svn*
Iwd ——○—— B2

Suw ——○—— X2
Swv ——○—— Y2
Ivd ——○—— A2    LOGIC CIRCUIT    76  O2 ——○ Swn*
Iud ——○—— B2

## FIG. 13

## FIG. 14

# FIG. 15

FIG. 16

FIG. 17

# FIG. 18

**REFERENCES CITED IN THE DESCRIPTION**

**Patent documents cited in the description**

- JP 2013183565 A